Europäisches Patentamt

European Patent Office

Office européen des brevets

(19)

(11) Veröffentlichungsnummer: **0 154 246 B1**

(12) **EUROPÄISCHE PATENTSCHRIFT**

(45) Veröffentlichungstag der Patentschrift:
13.07.88

(21) Anmeldenummer: **85101804.4**

(22) Anmeldetag: **20.02.85**

(51) Int. Cl.⁴: **B 01 J 20/32,** B 01 D 15/08,
G 01 N 30/48

(54) **Phasenträger für die Verteilungschromatographie von Makromolekülen, Verfahren zu ihrer Herstellung und ihre Verwendung.**

(30) Priorität: **02.03.84 DE 3407814**

(43) Veröffentlichungstag der Anmeldung:
**11.09.85 Patentblatt 85/37**

(45) Bekanntmachung des Hinweises auf die Patenterteilung:
**13.07.88 Patentblatt 88/28**

(84) Benannte Vertragsstaaten:
**BE CH DE FR GB IT LI NL SE**

(56) Entgegenhaltungen:
**DE - A - 2 709 094
DE - A - 2 712 344
GB - A - 1 310 872
US - A - 3 478 886
US - A - 3 983 299
US - A - 4 140 653
US - A - 4 159 966**

(73) Patentinhaber: **Merck Patent Gesellschaft mit beschränkter Haftung, Frankfurter Strasse 250, D-6100 Darmstadt (DE)**

(72) Erfinder: **Müller, Werner, Prof. Dr., Geibelstrasse 8, D-8000 München 80 (DE)**
Erfinder: **Sänger, Heinz Ludwig, Prof. Dr., Am Klopferspitz 10, D-8033 Martinsried (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung sind Phasenträger für die Verteilungschromatographie von Makromolekülen insbesondere im wäßrigen Polyethylenglykol-Dextran-Zweiphasensystem, Verfahren zu ihrer Herstellung und ihre Verwendung.

Es ist bekannt, daß man biologische Makromoleküle, subzelluläre Einheiten, Bakterien und eukaryotische Zellen durch Gegenstromverteilung im wäßrigen Polyethylenglykol-Dextran-System trennen kann (P.Å. Albertson «Partition of Cell Particles and Macromolecules» [1971], 2nd Ed., Almquist & Wiksell, Stockholm). Diese Gegenstromverteilungsverfahren sind nun aber apparativ äußerst aufwendig und zeitraubend, insbesondere wenn bei kleinen Verteilungskoeffizienten eine große Vielzahl von Gegenstromverteilungsstufen notwendig ist, um die gewünschte Trennung zu erreichen. Es wurden daher bereits Versuche unternommen, diesen Gegenstromverteilungsprozeß durch ein verteilungschromatographisches Verfahren zu ersetzen, da es in dieser Weise wesentlich einfacher möglich ist, eine Vielzahl von Trennungsstufen zu erreichen. Allerdings scheiterten diese Versuche bislang an geeigneten Trägern für die stationäre Phase.

Bislang konnten lediglich doppelsträngige Nucleinsäuren im wäßrigen Polyethylenglykol-Dextran-System unter Verwendung von Cellulose als Träger für die dextranreiche stationäre Phase chromatographisch getrennt werden (W. Müller, H.J. Schuetz, C. Guerrier-Takada, P.E. Cole und R. Potts, Nucleic Acids Research, Vol. 7, Nr. 8 [1979] 2483 bis 2499, und W. Müller und G. Kütemeier, Eur. J. Biochem. 128 [1982], 231 bis 238). Bei diesen Untersuchungen der Flüssig/Flüssig-Chromatographie von DNA-Fragmenten wurde als Trägermaterialien für die dextranreiche Phase des wäßrigen Polyethylenglykol-Dextran-Systems eine Reihe von Materialien eingesetzt, von denen sich insbesondere Cellulose als geeignet erwiesen hat, da es eine ausreichende Affinität für die dextranreiche Phase zeigt. Für Proteine und proteinhaltige Zellbestandteile sind diese Phasenträger aber wegen ihrer ausgeprägten Adsorptionseigenschaften nicht anwendbar; auch bei Ribonucleinsäuren machen sich adsorptionsbedingte Störeffekte schon bemerkbar. Kationische oder anionische Gele auf Polysaccharidbasis binden die dextranreiche Phase zwar ähnlich gut wie Cellulose, sind jedoch nur für isokratische Trennprozesse zu benutzen, da die Phase abgestoßen wird, sobald sich das elektrische Phasenpotential im Zuge der Gradientenelution mit verschiedenen Salzen in der mobilen, polyethylenreichen Phase ändert.

Unter den neutralen Gelen, die als potentielle Phasenträger für eine solche Verteilungschromatographie in Frage kämen, sind poröse Mischpolymere auf Vinylbasis (Fraktogele der Firma Merck, Darmstadt) sowie die Polyacrylamidgele (Biogele der Firma Biorad). Erstere binden für eine generelle Anwendung eine zu geringe Menge der Dextranphasen, während im letzteren Falle die gebundene Phase für Makromoleküle kaum zugänglich ist. Dieser Sachverhalt wird auch in der oben angesprochenen Literaturstelle Eur. J. Biochem. 128 (1982), Seite 233, deutlich hervorgehoben. Diese Unzugänglichkeit der gebundenen Phase gilt auch für Polyacrylamid-Agarose-Kombinationsgele (beispielsweise die AcA-Ultrogele der Firma IDF).

Aus US-A-3 983 299 sind stationäre Träger für die Chromatographie bekannt, auf deren Oberfläche Dextran-Moleküle kovalent als feste Schicht aufgebracht sind. Diese Träger bilden jedoch gegenüber einer Polyethylenglykolphase zum Beispiel keine zweite, flüssige Phase und kommen daher nicht für eine Flüssig/Flüssig-Verteilungschromatographie in Frage.

Die Aufgabe der vorliegenden Erfindung besteht somit darin, Phasenträger mit universellem Anwendungsbereich für die Verteilungschromatographie von Makromolekülen zu schaffen, die eine hervorragende Trennung in einfacher Weise ermöglichen, leicht herzustellen sind und für die Trennung von nieder- und hochmolekularen Ribonucleinsäuren ebenso geeignet sind wie für subzelluläre Einheiten und ganze Zellen, was namentlich für die Virusforschung und Viroidforschung von grosser Bedeutung ist.

Es hat sich nunmehr gezeigt, dass diese Aufgabe mit Hilfe von Phasenträgern gelöst werden kann, die Grundträgerteilchen umfassen, deren Oberfläche mit einem fest anhaftenden Material mit Affinität für eine der Phasen des Phasensystems für die Verteilungschromatographie beschichtet ist.

Gegenstand der Erfindung sind daher die Phasenträger gemäß Hauptanspruch. Die Unteransprüche betreffen besonders bevorzugte Ausführungsformen dieses Erfindungsgegenstandes sowie ein Verfahren zur Herstellung dieser Phasenträger und deren Verwendung.

Die Erfindung betrifft somit Phasenträger für die Flüssig/Flüssig-Verteilungschromatographie von Makromolekülen, namentlich einsträngigen Nucleinsäuren und insbesondere Proteinen sowie subzellulären Einheiten und ganzen Zellen, die aus nichtadsorptiven, in dem Phasensystem unlöslichen Grundträgerteilchen aus einem anorganischen und/oder organischen Material in hydroxylierter Form mit einer durchschnittlichen Teilchengröße im Bereich von 7 bis 2000 µm bestehen, deren Oberfläche mit einem in dem Phasensystem unlöslichen, chemisch gebundenen Polyacrylamid mit Affinität für eine der Phasen des Phasensystems für die Verteilungschromatographie beschichtet ist.

Bei dem erfindungsgemässen Phasenträger sind die Grundträgerteilchen mit Polyacrylamid, das eine Affinität für eine der Phasen, namentlich die Dextranphase des Polyethylenglykol-Dextran-Systems aufweist, beschichtet, was zur Folge hat, daß bei diesen Kombinationsteilchen die Dextranphase zwangsläufig an der Oberfläche gebunden wird und in dieser Weise auch für extrem große Moleküle bis zu ganzen Zellen zugänglich wird. Auf der anderen Seite sorgen die Grundträgerteilchen für die erforderliche mechanische Stabilität des Phasenträgers.

Die Grundträgerteilchen bestehen aus einem anorganischen und/oder organischen Material, beispielsweise aus Aluminiumoxid, einem Silicat, Kieselgur, Kieselgel, Cellulose, Cellulosederivaten, vernetztem Dextran, vernetzter Agarose oder einem Polymer oder Copolymer auf der Grundlage von Monomeren, wie Acrylsäure, Acrylamid, Acrylsäureestern, Acrylnitril, Methacrylsäure, Methacrylamid, Methacrylsäureestern, Methacrylnitril und/oder Vinylverbindungen oder Gemischen aus diesen Monomeren. Die Grundträgerteilchen aus einem dieser angegebenen Materialien liegen dabei in hydroxylierter Form vor, da es in dieser Weise ohne weiteres möglich ist, die Oberflächenschicht fest mit den Grundträgerteilchen zu verbinden, namentlich eine chemische Bindung zwischen dem Material der Oberflächenschicht und dem der Grundträgerteilchen zu erreichen.

Besonders vorteilhaft ist es, Grundträgerteilchen aus einem diolsubstituierten Kieselgel, einem hydrophilisierten Polymethacrylat, einem Silicat mit stärkeartiger Beschichtung oder einem porösen Polymer auf Vinylbasis einzusetzen.

Mit besonderem Vorteil besitzen die Grundträgerteilchen des erfindungsgemäßen Phasenträgers eine durchschnittliche Teilchengröße von 7 bis 100 µm und insbesondere von 10 bis 50 µm.

Die Grundträgerteilchen sind mit einem polymeren Material beschichtet, das mit besonderem Vorteil chemisch an das Material der Grundträgerteilchen gebunden ist. Dabei hat es sich als besonders vorteilhaft erwiesen, die Grundträgerteilchen mit Polyacrylamid zu beschichten, welches durch Aufpfropfen der monomeren Bestandteile auf die Grundträgerteilchen gebildet wird. Für diesen Zweck hat sich aufgepfropftes Polyacrylamid und insbesondere lineares oder schwach vernetztes Polyacrylamid am für den angestrebten Trenneffekt geeignetsten erwiesen.

Ein weiterer Gegenstand der Erfindung ist ein Verfahren zur Herstellung dieses Phasenträgers, welches darin besteht, die Grundträgerteilchen der oben beschriebenen Art chemisch mit dem in Form einer Oberflächenschicht aufgebrachten polymeren Material zu verbinden. Vorzugsweise wird dies in der Weise durchgeführt, dass man die Grundträgerteilchen durch Pfropfpolymerisation mit der Oberflächenschicht aus dem polymeren Material versieht.

Gemäss einer bevorzugten Ausführungsform dieses Verfahrens werden die Grundträgerteilchen aus einem hydroxylierten Material der oben angegebenen Art in einer das Monomere enthaltenden Lösung suspendiert, worauf das Aufpfropfen des polymeren Materials im Zuge einer Redoxpolymerisation unter Sauerstoffausschluß bewirkt wird. Dabei kann man bei diesem Verfahren mit Vorteil als Polymerisationskatalysator Cer(IV)-ionen verwenden, da dieses Material die Bildung der die Polymerisation begünstigenden freien Radikale ausschließlich an der Oberfläche der Grundträgerteilchen bewirkt, so daß die Polymerisation in Form einer Pfropfpolymerisation abläuft. Bezüglich Einzelheiten dieses an sich bekannten Verfahrens darf auf G. Mino und S. Kaizerman in Journal of Polymer Science, Vol. XXXI, Nr. 122 (1958), 242 bis 243, verwiesen werden.

Bei dieser Verfahrensführung setzt man das zur Bildung des als Oberflächenschicht bevorzugten Polyacrylamids verwendete Acrylamid vorzugsweise in Form einer wäßrigen Lösung ein.

Es hat sich gezeigt, dass bei der oben angesprochenen Redoxpolymerisation in Gegenwart von Cer(IV)-ionen die Pfropfpolymerisation von Acrylamid unter sorgfältigem Sauerstoffausschluß innerhalb von 30 bis 240 Minuten eine genügend dichte Polyacrylamidschicht auf den Grundträgerteilchen ergibt, die zur Bindung einer ausreichenden Menge der Dextranphase für die Verteilungschromatographie im wäßrigen Polyethylenglykol-Dextran-System ausreicht.

Im einzelnen wurden die folgenden Träger mit Erfolg mit einer Polyacrylamidschicht versehen:

«Superose®»: vernetzte Agarose der Firma Pharmacia, Teilchengröße 25 bis 40 µm,

«Lichrosorb®»-Diol: diolsubstituiertes Kieselgel der Firma Merck, Teilchengröße 10 µm,

«Separon Hema 1000®»: hydrophilisiertes Polymethacrylat der Laboratory Instruments Works, Prag, Teilchengröße 16 bis 21 µm,

«TSK-SIL 3000®»: Silicatträger mit stärkeartiger Beschichtung der Firma Toyo Soda, Teilchengröße 10 µm (unter anderem Inhalt der «Blauen Säule» der Firma LKB),

«TSK-HW-40(S)®,-55(S), -65(S) und -75(S)»: poröse Mischpolymere auf Vinylbasis, 1 m Äq OH/g, der Firma Toyo Soda, erhältlich als «Fractogele» der Firma Merck, Teilchengröße 25 bis 40 µm.

Es hat sich gezeigt, daß die erfindungsgemäßen Phasenträger für die Trennung von nieder- und hochmolekularen Ribonucleinsäuren, von doppelsträngigen Nucleinsäuren, von subzellulären Einheiten und ganzen Zellen geeignet sind, so daß sie für die Isolierung von Viroid-RNA aus pflanzlichen Rohextrakten und für die chromatographische Trennung subzellulärer Einheiten und ganzen Zellen unter anderem für medizinisch-diagnostische Zwecke angewandt werden können.

Gegenstand der Erfindung ist daher auch die Verwendung der oben definierten Phasenträger zur verteilungschromatographischen Trennung von Makromolekülen, Biopolymeren, subzellulären Einheiten und ganzen Zellen in wäßrigen Zwei- und Mehrphasensystemen auf Polymerbasis, wie sie beispielsweise von P.Å. Albertson («Partition of Cell Particles and Macromolecules» [1971], 2nd Ed., Almquist & Wiksell, Stockholm, S. 18–30) beschrieben worden sind, insbesondere in wäßrigen Polyethylenglykol-Dextran-Zweiphasensystemen.

Die folgenden Beispiele dienen der weiteren Erläuterung der Erfindung.

Beispiel

Dieses Beispiel verdeutlicht die Herstellung eines erfindungsgemäßen Phasenträgers.

Man beschickt einen mit einem Gaseinleitungsrohr, einem Tropftrichter und einem Vakuumanschluß versehenen Dreihalskolben mit einer Lösung von 50 g Acrylamid in 500 ml destilliertem Wasser und suspendiert 20 g Grundträgerteilchen aus einem diolsubstituierten Kieselgel (Lichrosorb®-Diol der Firma Merck) mit einer Teilchengrösse von 10 µm in dieser Lösung. Dann spült man zunächst während 5 Minuten mit nachgereinigtem Stickstoff, evakuiert und füllt erneut mit Stickstoff. Diese Maßnahmen des Evakuierens und Befüllens mit Stickstoff wiederholt man zweimal, wonach man 15 ml einer 0,2 M Lösung von Cer(IV)-ammoniumnitrat in 1 N Salpetersäure unter Rühren zusetzt. Man leitet unter mäßigem Rühren während 60 Minuten Stickstoff durch die Suspension, wobei die Intensität der gelben Farbe der Cer(IV)-ionen deutlich abnimmt. Dann versetzt man die Suspension unter Luftzutritt mit weiteren 20 g der Grundträgerteilchen und filtriert nach dem Mischen unter Druck über ein Blaubandfilter (Schleicher & Schüll Nr. 589³) ab. Nach dem Waschen mit 400 ml destilliertem Wasser wäscht man mit rund 400 ml einer 0,2 M Natriumacetatlösung in einem Cacodylat-Puffer (10 mM Natriumcacodylat/1 mM Ethylendiamintetraessigsäure, pH-Wert = 6).

In gleicher Weise versieht man Grundträgerteilchen aus den oben spezifisch angesprochenen Materialien mit einer Polyacrylamidschicht, wobei es nicht notwendig ist, die oben angegebene Verdünnung des polyacrylamidbeschichteten Trägers mit nichtbeschichtetem Material durchzuführen. Im Fall von Grundträgerteilchen aus «Lichrosorb®» ist diese Verdünnung erforderlich, um das beschichtete Material filtrierbar zu machen und somit die Beschichtung mit der Dextranphase zu begünstigen.

Beispiel 2

Zur Verdeutlichung der Trenneigenschaften des erfindungsgemäßen Phasenträgers wurden Vergleichsversuche durchgeführt, bei denen die erfindungsgemäßen Phasenträger Phasenträgern gegenübergestellt wurden, die lediglich aus den Grundträgerteilchen des entsprechenden erfindungsgemäßen Phasenträgers bestehen.

Zunächst wurden die Phasenträger mit der Dextranphase des Polyethylenglykol-Dextran-Systems wie folgt beschichtet.

Das gewaschene Material wurde im Druckfilter bei 37 °C mit 2,5 Volumen der Dextranphase des Polyethylenglykol-Dextran-Systems (hergestellt durch Lösen von 66,3 g Dextran T500 und 5,4 g Polyethylenglykol 8000 in 428,3 ml 0,2 M Natriumacetat in dem in Beispiel 1 beschriebenen Cacodylat-Puffer) gespült, wonach der Phasenüberschuß mit der polyethylenglykolreichen Oberphase des gleichen Systems (hergestellt durch Lösen von 3 g Dextran T500, 71,7 g Polyethylenglykol 8000 in 925,3 ml 0,2 M Natriumacetat in dem Cacodylat-Puffer) ausgewaschen wurde. Nach dem Suspendieren des Materials in 3 Volumen Oberphase wurde der in dieser Weise erhaltene Phasenträger in ein geeignetes Chromatographierohr mit einem auf 37 °C thermostatisierten Heizmantel eingeschlämmt.

Dann wurden die Trenneigenschaften der in dieser Weise mit der Dextranphase versehenen unbeschichteten Grundträgerteilchen einerseits bzw. der erfindungsgemäßen Phasenträger andererseits untersucht, und zwar unter Verwendung eines Probenmaterials auf der Grundlage eines Gemisches aus Transfer-RNA (tRNA) und 5sRNA. Beide RNA-Komponenten gehören zu den löslichen Ribonucleinsäuren und besitzen die folgenden Eigenschaften:

tRNA: Molgewicht ≅ 30000, besteht aus 40 bis 60 gleich großen Spezies, die sich in ihrer Aminosäureakzeptoraktivität unterscheiden.

5sRNA: Molgewicht ≅ 43000, bei den meisten Organismen einheitliche RNA, die eine Rolle bei der Übertragung einer RNA-Basensequenz in eine Aminosäuresequenz spielt.

Die Trennung erfolgt in dem Polyethylenglykol-Dextran-System «D» aus 6,20 Gew.-% Dextran, 4,40 Gew.-% Polyethylenglykol und 89,40 Gew.-% Wasser, welches in der Unterphase aus 13,25 Gew.-% Dextran, 1,07 Gew.-% Polyethylenglykol und 85,68 Gew.-% Wasser und in der Oberphase aus 0,30 Gew.-% Dextran, 7,17 Gew.-% Polyethylenglykol und 92,53 Gew.-% Wasser besteht (dieses und ähnliche Polyethylenglykol-Dextran-Systeme sind aus der oben angesprochenen Literaturstelle P.Å. Albertson bekannt, siehe insbesondere das Phasendiagramm auf Seite 264). Bei diesem Polyethylenglykol-Dextran-Zweiphasensystem läßt sich der Verteilungskoeffizient insbesondere durch die Ionenzusammensetzung beeinflussen, d.h. durch die Zugabe unterschiedlicher Salze, wobei die Lithiumionen den Verteilungskoeffizienten K steigern, während die anderen Alkalikationen den entgegengesetzten Effekt ausüben.

Bei der hier durchgeführten Trennung werden daher im Phasenpaar die folgenden Elektrolyte verwendet:

10 mM Natrium-Cacodylat-Puffer mit einem pH-Wert von 6,0

3 mM Natriumazid

1 mM Natriumsalz der Ethylendiamintetraessigsäure

+ 0,2 M Natriumacetat.

Die Trennung erfolgt bei einer Temperatur von 37 °C in der thermostatisierten Chromatographiesäule.

Die Probemengen sind in $OD_{254}$-Einheiten angegeben, d.h. als optische Dichte bei einer Wellenlänge von 254 nm, wobei 25 $OD_{254}$ 1 mg RNA entsprechen.

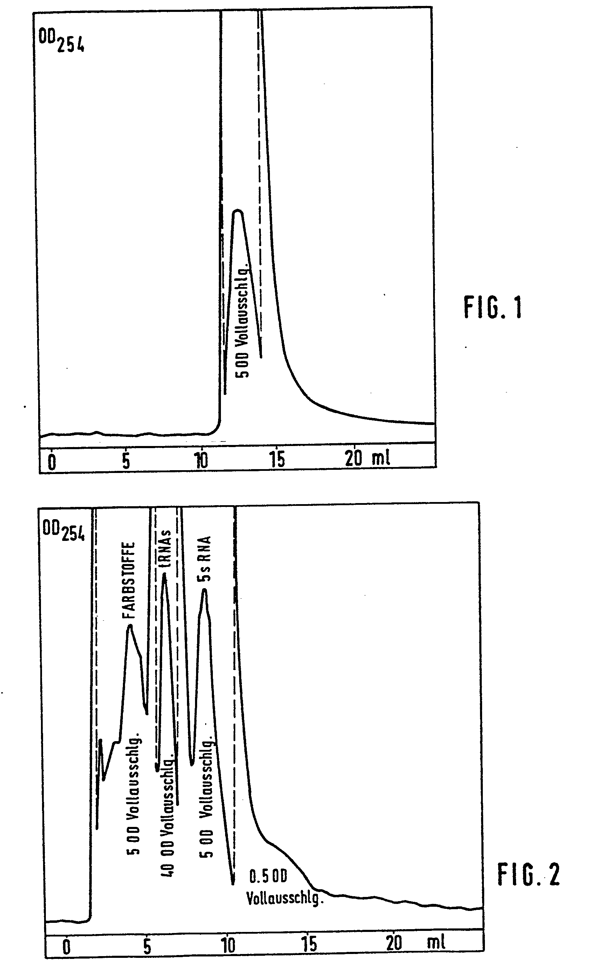

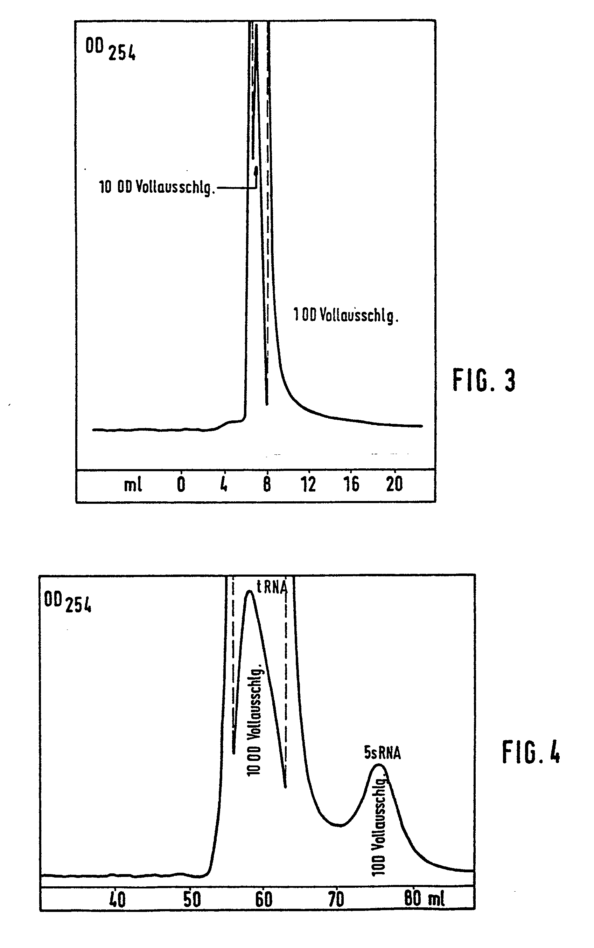

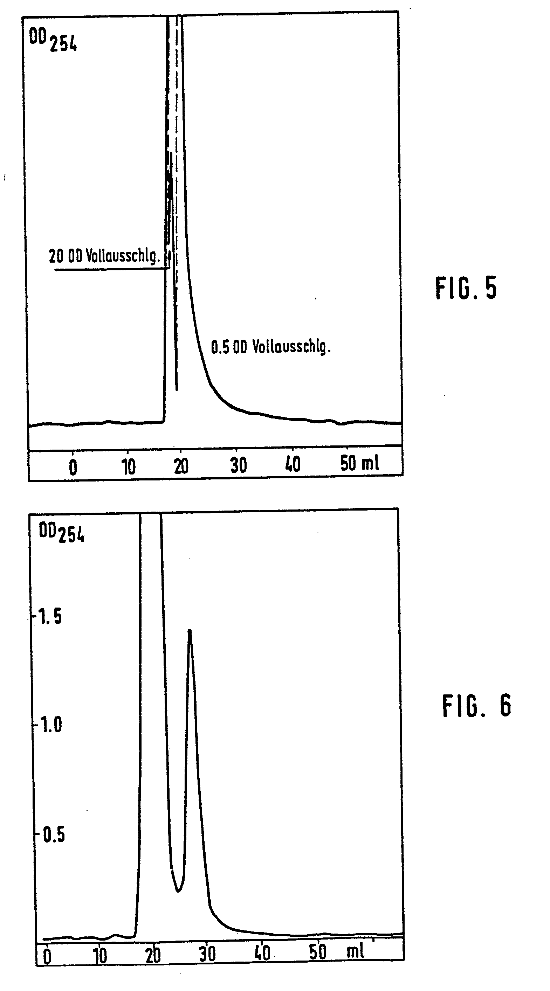

Die bei diesen Trennungen erhaltenen Ergebnisse sind in den beigefügten Figuren 1 bis 6 dargestellt, wobei diese Figuren im einzelnen folgendes zeigen:

Figur 1. Vergleichsversuch: Chromatographie einer 10 $OD_{254}$-Probe an einer Säule, die mit Grundträgerteilchen aus nicht mit Polyacrylamid beschichtem «Lichrosorb®»-Diol gefüllt ist. Säulenvolumen: 55 ml, Flußrate: 18 ml/h;

Figur 2. Erfindungsgemäßer Versuch: Trennung einer farbstoffhaltigen 50 $OD_{254}$-Probe an einer Säule, die mit polyacrylamidbeschichteten Grundträgerteilchen aus «Lichrosorb®»-Diol beschickt ist. Säulenvolumen: 8,4 ml, Flußrate: 15 ml/h;

Figur 3. Vergleichsversuch: Chromatographie einer 19 $OD_{254}$-Probe an einer mit Grundträgerteilchen aus «Superose®» beschichteten Säule, Säulenvolumen: 10 ml, Flußrate: 9 ml/h;

Figur 4. Erfindungsgemäßer Versuch: Trennung einer 50 $OD_{254}$-Probe an einer Säule, die mit Polyacrylamid beschichteten «Superose®»-Teilchen beschickt ist, Säulenvolumen: 60 ml, Flußrate: 20 ml/h;

Figur 5. Vergleichsversuch: Chromatographie einer 35 $OD_{254}$-Probe an einer mit Grundträgerteilchen aus «TSK-HW-40(S)» beschickten Säule, Säulenvolumen: 65 ml, Flußrate: 15 ml/h;

Figur 6. Erfindungsgemäßer Versuch: Trennung einer 35 OD₂₅₄-Probe an einer Säule, die mit Polyacrylamid beschichteten «TSK-HW-40(S)»-Grundträgerteilchen beschickt ist, Säulenvolumen: 65 ml, Flußrate: 15 ml/h.

Aus den obigen Figuren ist ersichtlich, daß mit Hilfe der erfindungsgemäßen Phasenträger im Vergleich zu Säulen, die die unbeschichteten Grundträgerteilchen enthalten, eine überraschend saubere Trennung der Bestandteile des eingesetzten Trenngemisches möglich ist. Damit ist aber ersichtlich, dass die erfindungsgemäßen Phasenträger eine unerwartet vorteilhafte Eignung für die Trennung von biologischen Makromolekülen besitzen, die in keiner Weise vorausgesehen werden konnte, und mit großem Vorteil für Trennverfahren und medizinisch-diagnostische Verfahren angewandt werden können.

## Patentansprüche

1. Phasenträger für die Flüssig/Flüssig-Verteilungschromatographie von Makromolekülen, gekennzeichnet durch nichtadsorptive, in dem Phasensystem unlösliche Grundträgerteilchen, die aus einem anorganischen und/oder organischen Material in hydroxylierter Form bestehen, mit einer durchschnittlichen Teilchengröße von 7 bis 2000 μm, deren Oberfläche mit chemisch gebundenem Polyacrylamid beschichtet ist.

2. Phasenträger nach Anspruch 1, dadurch gekennzeichnet, daß die Grundträgerteilchen aus Aluminiumoxid, einem Silicat, Kieselgur, Kieselgel, Cellulose, einem Cellulosederivat, einem vernetzten Dextran, einer vernetzten Agarose oder einem Polymer oder Copolymer auf der Grundlage von Acrylsäure, Acrylamid, Acrylsäureestern, Methacrylsäure, Methacrylamid, Methacrylsäureestern und/oder Vinylverbindungen oder Gemischen aus diesen Monomeren in hydroxylierter Form bestehen.

3. Phasenträger nach den Ansprüchen 1 bis 2, dadurch gekennzeichnet, daß die Grundträgerteilchen eine durchschnittliche Teilchengröße von 7 bis 100 μm aufweisen.

4. Phasenträger nach den Ansprüchen 1 bis 3, dadurch gekennzeichnet, daß die Grundträgerteilchen mit einem aufgepfropften linearen oder schwach vernetzten Polyacrylamid beschichtet sind.

5. Verfahren zur Herstellung eines Phasenträgers gemäß den Ansprüchen 1 bis 4, dadurch gekennzeichnet, daß die Grundträgerteilchen in einer das Acrylamid enthaltenden Lösung suspendiert werden und das Aufpropfen des polymeren Materials im Zuge einer Redoxpolymerisation unter Sauerstoffausschluß bewirkt wird.

6. Verfahren nach Anspruch 5, dadurch gekennzeichnet, daß als Polymerisationskatalysator Cer(IV)-ionen verwendet werden.

7. Verwendung der Phasenträger gemäß den Ansprüchen 1 bis 4 zur verteilungschromatographischen Trennung von Makromolekülen, Biopolymeren, subzellulären Einheiten und ganzen Zellen.

## Claims

1. Phase support for the liquid/liquid partition chromatography of macromolecules, characterised in that it contains non-adsorptive base support particles consisting of an inorganic and/or organic material in a hydroxylated form which are insoluble in the phase system and have an average particle size within the range from 7 to 2000 μm, the surface of which is coated with a polyacrylamide that is chemically linked to said base support particles.

2. Phase support according to Claim 1, characterised in that the base support particles consist of aluminium oxide, a silicate, kieselguhr, silica gel, cellulose, a cellulose derivative, a crosslinked dextran, a crosslinked agarose or a polymer or copolymer based on acrylic acid, acrylamide, acrylic acid esters, methacrylic acid, methacrylamide, methacrylic acid esters and/or vinyl compounds or mixtures of these monomers in a hydroxylated form.

3. Phase support according to Claims 1 to 2, characterised in that the base support particles have an average particle size of 7 to 100 μm.

4. Phase support according to Claims 1 to 3, characterised in that the base support particles are coated with a grafted linear of slightly crosslinked polyacrylamide.

5. A process for the preparation of a phase support according to Claims 1 to 4, characterised in that the base support particles are suspended in a solution containing the acrylamide and that the grafting of the polymeric material is effected in the course of a redox polymerization with the exclusion of oxygen.

6. Process according to Claim 5, characterised in that cerium (IV) ions are used as the polymerization catalyst.

7. The use of the phase supports according to Claims 1 to 4 for the separation, by partition chromatography, of macromolecules, biopolymers, subcellular units and whole cells.

## Revendications

1. Support de phases pour la chromatographie de partage liquide/liquide de macromolécules, caractérisé en ce qu'il comporte des particules supports de base non adsorbantes insolubles dans le système de phases et constituées d'une matière inorganique et/ou organique sous forme hydroxylée avec une granularité moyenne de 7 à 2000 μm, la surface de ces particules étant enduite d'un polyacrylamide lié chimiquement.

2. Support de phases selon la revendication 1, caractérisé en ce que les particules supports de base sont constituées d'oxyde d'aluminium, d'un silicate, de kieselguhr, de gel de silice, de cellulose, d'un dérivé de la cellulose, d'un dextrane réticulé, d'un agarose réticulé ou d'un polymère ou copolymère à base d'acide acrylique, d'acrylamide, d'esters d'acide acrylique, d'acide méthacrylique, de méthacrylamide, d'esters d'acide méthacrylique et/ou de composés vinyliques, ou encore de mélanges de ces monomères sous forme hydroxylée.

3. Support de phases selon les revendications 1 et 2, caractérisé en ce que les particules supports de base ont une granularité moyenne de 7 à 100 μm.

4. Support de phases selon les revendications 1 à 3, caractérisé en ce que les particules supports de base sont enduites d'un polyacrylamide greffé, linéaire ou faiblement réticulé.

5. Procédé de préparation d'un support de phases selon les revendications 1 à 4, caractérisé en ce qu'on met les particules supports de base en suspension dans une solution contenant l'acrylamide, tandis que l'on effectue le greffage de la matière polymère au cours d'une polymérisation redox à l'abri de l'oxygène.

6. Procédé selon la revendication 5, caractérisé en ce que, comme catalyseur de polymérisation, on -tilise des ions Cer(IV).

7. Utilisation des supports de phases selon les revendications 1 à 4, pour la séparation, par chromatographie de partage, de macromolécules, de biopolymères, d'unités subcellulaires et de cellules entières.

FIG. 1

FIG. 2

7

OD 254

10 OD Vollausschlg.

1 OD Vollausschlg.

ml  0   4   8   12  16  20

FIG. 3

OD 254

tRNA

10 OD Vollausschlg.

5sRNA

1OD Vollausschlg.

40    50    60    70    80 ml

FIG. 4

FIG. 5

FIG. 6